# EUROPEAN PATENT APPLICATION

(11) **EP 1 902 620 A1**
(43) Date of publication of application: **26.03.2008**
(21) Application number: 06119953.5
(22) Date of filing: 01.09.2006
(51) Int. Cl.: A21B 5/02

(54) **An induction wafer baking system**

(71) Applicant: Nestec S.A., 1800 Vevey (CH)
(72) Inventor: Parsons, Nicholas Tyers, YORK, Yorkshire YO23 3UX (GB)

(57) **Abstract**

The present invention relates to an automatic wafer baking apparatus (1) for baking wafers from a liquid or pasty dough, said apparatus (1) comprising at least two baking moulds (2), each having one pair of top (3) and lower (4) baking plates, said apparatus (1) further comprising moving means (5, 6, 7) for moving at least one plate relative to the other so that each baking mould (2) can move from a closed configuration to an open configuration, heating means for heating the plates (3, 4) to a predetermined baking temperature, means for injecting a predetermined quantity of dough between the baking plates (3, 4) of each mould (2), and means (12, 13) for removing a baked wafer from a baking mould (2), characterized in that each baking mould (2) is stationary in the apparatus (1) and is independent from the other(s).

## Description

The present invention relates to an apparatus for automatically baking wafers at industrial scale, preferably using induction heating.

Wafer products are widely used in the confectionery field and are becoming more popular as consumers seek lighter but still indulgent confectionery products. The wafer category is therefore expected to grow further.

Wafers are baked products which are made from wafer batter - i.e. wafer dough - and have crisp, brittle and fragile consistency. They are thin, with an overall thickness usually between < 1 and 4 mm and typical product densities range from 0.1 to 0.3 g/cm3. The surfaces are precisely formed, following the surface shape of the plates between which they were baked. They often carry a pattern on one surface or on both.

Two basic types of wafer are described by K.F.Tiefenbacher in "Encyclopaedia of Food Science, Food Technology and Nutrition p 417-420 - Academic Press Ltd London - 1993":
1) No- or low-sugar wafers. The finished biscuits contain from zero to a low percentage of sucrose or other sugars. Typical products are flat and hollow wafer sheets, moulded cones or fancy shapes.
2) High-sugar wafers. More than 10% of sucrose or other sugars are responsible for the plasticity of the freshly baked sheets. They can be formed into different shapes before sugar recrystallization occurs. Typical products are moulded and rolled sugar cones, rolled wafer sticks and deep-formed fancy shapes.

The existing industrial equipment for manufacturing low-sugar wafers comprises ovens with a series of baking moulds, each comprising two baking plates which are hinged to one another at one of their extremities. The moulds are disposed one after the other, continuously circulating on a chain. The first stage is the depositing of liquid batter onto the lower plate in a pair of baking plates. As the chain moves, the plates close, are locked and enter the heated zone, being disposed above a row of gas burners or electrical radient heaters. The temperature of the mould plates increases and allows baking of the batter to make a wafer. The mould then moves to an ejection stage where both plates of the mould pivot like jaws to open the mould and the wafer is ejected and falls onto a conveyor belt.

Such wafer baking systems are widely known and used but have a number of disadvantages when a technical problem arises which requires an intervention or maintenance of one mould. It is then absolutely necessary to stop the whole production line. Due to the constant movement of the moulds, the bearings and hinges between the plates tend to wear out, which can alter the gap between the plates causing substandard or low weight wafers to be produced.

The transfer of heat from the gas burners or radiant heaters to the wafer baking plates is inefficient, and systems are known where each plate is heated by an electric cartridge heater that is installed in the metal block of the baking plate. Passing a current through the heater coils in the cartridge heater causes it to heat up and therefore heat the wafer baking plate by conduction. This system in turn has a number of disadvantages. The distribution of heat across the plate is not even, as the region closest to the cartridge coils is hotter than the rest of the plate. The life of the cartridge heaters is too short. The electric supply for the moving plate is made by slip rings or bus bars (i.e. electric contact between two moving elements). This poses maintenance and safety problems due to the large amount of dust and grease particles that are generated in the wafer baking environment.

Continuous baking systems are also known which use induction heating to heat a single surface on which a food material is cooked.

EP 320 337 A1 describes a series of metal plates which move on a conveyor over induction heating coils. The metal plates can be used to continuously cook food items such as omelettes.

US 2004/0250692 A1 describes a system for cooking sugar wafers where an endless ferromagnetic metal conveyor belt is heated from below by induction coils.

Sugar wafers are flexible when hot so a continuous strip of sugar wafer can be removed from the metal conveyor belt. Unlike in the production of flat or hollow wafer sheets, there is no requirement to heat the sugar wafer batter between two heated mould surfaces. In both EP 330327 and US 2004/0250692 the induction coils are stationary and there is an air gap between the coils and the moving metal component. The induction coil produces eddy currents in the metal which generate heat. The heating thus produced is very uniform across the surface of the ferrous metal part, and the increase or decrease of temperature is also very fast compared to gas heating or conduction from electric heater coils. Having stationary induction coils overcomes the problem of supplying electric current to moving plates, but in order to induce eddy currents in the metal components through an air gap, it is necessary to use expensive high frequency induction coils driven by frequency inverters.

In order to solve the above technical problems of current systems, the present invention proposes an automatic wafer baking apparatus for baking wafers from a liquid batter or pasty dough, said apparatus comprising at least two baking moulds, each having one pair of top and lower baking plates, said apparatus further comprising moving means for moving at least one plate relative to the other so that each baking mould can move from a closed configuration to an open configuration, heating means for heating the plates to a predetermined baking temperature, means for depositing on or injecting a predetermined quantity of dough in between the baking plates of each mould, and means for removing a baked wafer from a baking mould, characterized in that each baking mould is stationary in the apparatus and is independent from the other(s).

As can be understood, the present invention brings many advantages compared to the systems known in the art. For example, due to the fact that each mould in the apparatus is stationary, it is now possible to directly connect electrical cables for current to the heating and/or monitoring system in the baking plates. This prevents wearing or disconnection and therefore avoids frequent maintenance and production incidents that usually occur when using slip rings or bus bars as described herebefore. More importantly, due to the fact that each mould in the apparatus is stationary and independent from the other(s), it is now possible to stop one mould if maintenance is required, while keeping the other moulds of the apparatus running. This is a very important advantage of the present invention over the art because it allows to guarantee that the production will not be stopped if a problem arises in one mould. More than that, individual moulds can be selectively stopped and re-started in a very flexible way, independent from the other moulds of the apparatus, i.e. while the apparatus is running in order to adjust the net output of the whole production line.

As previously explained, any module can easily be stopped and accessed for maintenance, while this was not possible in existing apparatuses since temperature stability was lost in case a gap would be created in the chain of plates. This is no longer the case with the apparatus according to the present invention, as each plate has individual temperature setting.

In a highly preferred embodiment of the present invention, the heating means comprise a low frequency induction heating system embedded into the top and lower plates of each mould. Mains electricity supplies have low frequencies, typically 50 or 60Hz. Such electricity supplies are readily available and can be used to power the induction coils without expensive inverters. In contrast, to heat a ferrous metal part through an air gap, high frequencies are required, as described above for the prior art systems.

Such an induction heating is particularly beneficial as it provides great flexibility at low cost and ensures that no parts of the apparatus other than the heating plates is put to high temperatures in contrast to the current gas systems where the moving means are subject to high temperatures and flames which rapidly destroy the lubrication and fragile parts of the apparatus.

Alternatively, the heating means can comprise a system of steam heated pipes disposed in the body of the baking plates, or a system of pipes incorporated into the baking plates, said pipes conveying a pumped hot fluid.

Preferably, the apparatus of the present invention comprises at least two baking modules, each baking module comprising at least two baking moulds, and each module being independent from the other(s). With such a structure, the capacity of the production line can be adjusted according to the needs of the production and be expanded if necessary by adding new modules to the existing ones, which are connected to the central monitoring system of the production line.

Advantageously, each plate of a baking mould is heat insulated at its outside surface using readily available insulation materials which are enclosed in an outer sheath to prevent food contamination.

In a preferred embodiment of the present invention, the top plate of each mould is fixed, and wherein the moving means of the baking mould comprises:
a closing system with a closing arm moved by an actuator, said arm being fixed at the lower surface of the lower plate by a thermally insulated hinge bearing, and
an adjustment system for precisely adjusting the position of the lower plate parallel relative to the top plate when the mould is in the closed configuration, comprising a base part of the lower plate which is linked to the closing arm, with three setting screws positioned in a triangle that contact a similar plate on the top plate when the mould is closed, and allow to set the baking gap between the plates.

Due to the fact that each individual mould of the apparatus is independent from the others and comprises its own means for opening and closing the mould, it is very easy to change the wafer baking pressure and wafer thickness during the cook in one mould while not changing the cook parameters in the other moulds, This gives lots of flexibility in the production process and allows the cooking parameters to very precisely defined such as the closing pressure that is applied to the plates of a mould. Such a pressure has an impact on the quality of the wafer (eg. crispiness).

Preferably, the plates of each mould are made out of cast iron or carbon steel.

Also preferably, the apparatus according to the present invention comprises a plurality of baking modules disposed in a row side by side, and further comprising a conveyor belt disposed along and in front of the baking modules for timing, collecting and conveying the wafers expelled from the moulds.

In one embodiment of the present invention, a non-ferrous baking plate surface is added to the heating parts of the baking plates of a mould. The non-ferrous baking surface is then fixed to the heating part in a removable manner, and has two advantages. First, it enhances the surface properties of the heating part of the baking plates, as it can be made, for instance of ceramic, so as to prevent the wafer sticking to the baking surface. Second, it allows to vary the shape surface of the wafers that are produced without having to change the whole mould - which would require a greater amountof maintenance work -. For instance, the said non-ferrous baking part can have a specific shape, or embossing, and when the shape or embossing has to be changed, it is only necessary to switch to another non-ferrous baking surface.

Finally, each baking plate advantageously comprises a temperature probe linked to a central monitoring system, which allows to precisely monitor the cooking parameters for each individual mould of the apparatus.

Additional features and advantages of the present invention are described in, and will be apparent from, the description of the presently preferred embodiment which is set out below with reference to the drawings in which:
Figure 1 is a schematic perspective view of a pair of baking plates in a mould for an apparatus according to the invention ;
Figure 2 is a view similar to figure 1, the top plate being opened to show the location of the heating means ;
Figure 3 is a schematic perspective view of a baking module with two baking moulds, the moulds being in the open configuration ;
Figure 4 is a view similar to figure 3, the moulds of the baking module being in the closed configuration ;
Figure 5 is a schematic perspective view of an apparatus according to the present invention, comprising a series of independent baking modules.

The present invention concerns an automatic wafer baking apparatus 1 for baking wafers from a liquid or pasty dough.

The said apparatus comprises a plurality of baking moulds 2, each having one pair of top 3 and lower 4 baking plates, each made out of cast iron, with their external surface - i.e. the surface not in contact with the wafer batter during cooking -, which is covered by a thermally insulating material, such as Glastherm 68, an asbestos free non powdery hard sheet enclosed and sealed in an outer steel shell.

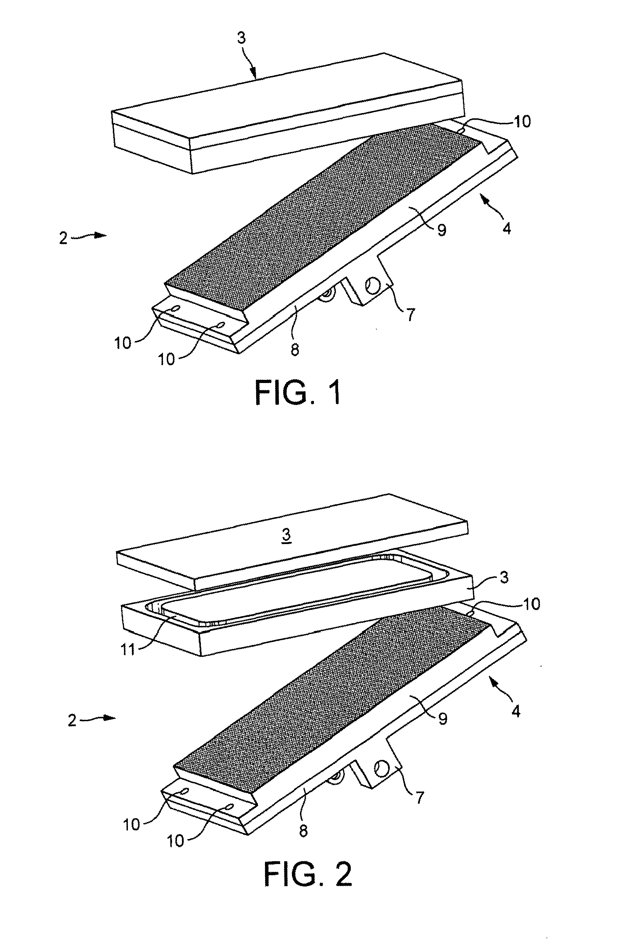

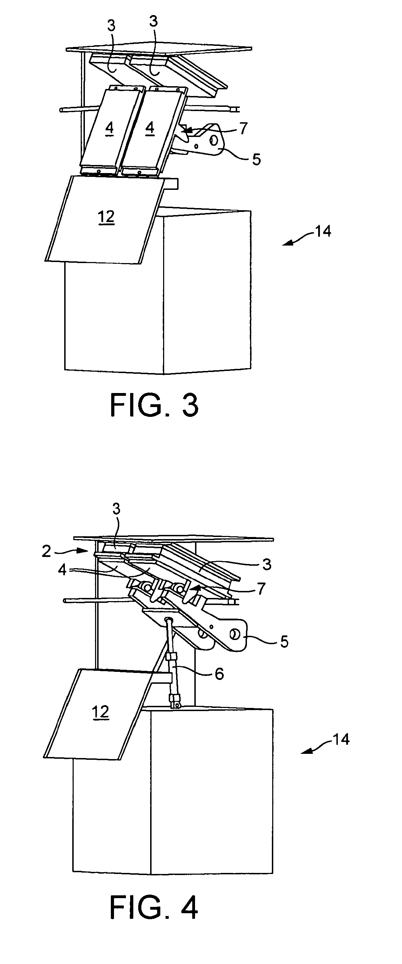

A mould 2 according to the invention is illustrated in figures 1 and 2. The top plate 3 of the mould 2 is fixed to the apparatus frame, while the lower plate 4 is movable relative to the top one. In order to realise the movement of the lower plate 4 relative to the top one 3, moving means are provided which are shown in figures 3 and 4, so that the baking mould 2 can move from a closed configuration (illustrated in figure 4) to an open configuration (illustrated in figure 3).

In each baking mould 2, the moving means comprise two cooperating systems, as follows.

First, a closing system is provided with a closing arm 5 moved by an actuator 6. Said arm 5 is fixed at the lower surface of the lower plate 4 by a thermally insulated hinge bearing 7.

Second, an adjustment system is provided for precisely adjusting the position of the lower plate 4, parallel relative to the top plate 3 when the mould is in the closed configuration. The adjustment system comprises a base part 8 of the lower plate 4 which is linked to the closing arm 5 - a heating part 9 of the lower plate 4 is disposed on top of the base part 8 -. The base part 8 of the lower plate 4 further comprises three setting screws 10 positioned in a triangle, which contact a similar plate on the top plate 3 when the mould is closed, so as to allow to set the baking gap between the top 3 and lower 4 plates.

In order to precisely position the lower plate 4 relative to the top plate 3 of the mould, the mould 2 is put in closed configuration, and then the setting screws 10 are set - i.e. screwed or unscrewed - so that the distance between the surfaces of the top plate and lower plate is the same at each point of said plates. Preferably, the mould 2 is set up so that the plates are a fixed parallel gap from each other when the said mould is in the closed configuration.

The heating means for heating the plates to a predetermined baking temperature are not shown in the drawing but comprise a low frequency induction heating system which consists of a wire coil inserted in a groove in the back of each wafer baking plate. A closing plate is then fixed to cover the back of the wafer plate enclosing the coil and forming a magnetic circuit. When an alternating voltage applied to the coil, current flows and a rapidly reversing magnetic field is set up in the plate metal. Heating of the plate is caused by eddy currents set up in the metal at molecular level. The coils of this heater do not themselves heat up and remain at or near the temperature of the metal block. They thus produce the very uniformly distributed heat required to bake wafers and have an almost indefinate life.

This coil is connected to the main electricity via an on/off controller (not shown). The controller receives a temperature signal from a probe inserted in the wafer plate and controls the power input to maintain the temperature. As already described herebefore, the said coil is embedded in a specific groove 11 made into the thickness of each plate, as illustrated in figure 2.

Batter is placed on the lower plate in the open position from a moving arm depositor. It is also possible to inject the batter directly into the cavity formed between the plates when they are closed.

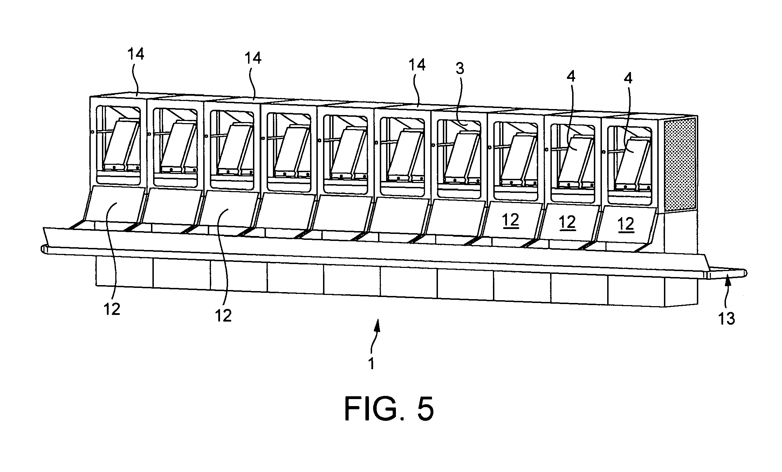

Furthermore, means for removing a baked wafer from a baking mould are also provided which include an inclined guiding plate 12 which creates a physical link between the lower baking plates 4 which is tipped over when the mould 2 is in the open configuration, as shown in figure 3, and a horizontal conveyor belt 13, as shown in figure 5, which collects, spaces and conveys the wafers to another part of the production facility, for instance a coating line or a packing line. The wafer can be assisted in its release by air blowers positioned around the back and side edges of the lower plate.

According to the invention, the apparatus comprises a series of baking modules 14, as illustrated in figure 5. The number of modules 14 is not limited but is greater than two. If necessary because of production constraints, one or several modules can be added to the existing ones. As shown in figures 3 and 4, each module 14 comprises two baking moulds 2, which are disposed side by side in the module.

All the modules 14 of the apparatus are linked to a central monitoring system (not shown in the drawing), which allows an operator to define baking parameters - temperature of the plates, closing pressure of the mould, etc. - for each module 14 of the apparatus 1, independently from the others.

Each baking plate 3, 4 comprises a temperature probe linked to the central monitoring system (not shown in the drawings). Pressure probes are also included in each mould so as to monitor the closing pressure of the plate pairs.

In that way, the production of wafers is automatic, and any problem arising in one baking module does not impact the rest of the production line.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications be covered by the appended claims. For instance, the size of the baking plates is not limited by current convention but could be as large as 2.5 x 1.5 meters or larger.

## Claims

1. An automatic wafer baking apparatus (1) for baking wafers from a liquid or pasty dough, said apparatus (1) comprising at least two baking moulds (2), each having one pair of top (3) and lower (4) baking plates, said apparatus (1) further comprising moving means (5, 6, 7) for moving at least one plate relative to the other so that each baking mould (2) can move from a closed configuration to an open configuration, heating means for heating the plates (3, 4) to a predetermined baking temperature, means for depositing on or injecting a predetermined quantity of dough between the baking plates (3, 4) of each mould (2), and means (12, 13) for removing a baked wafer from a baking mould (2), **characterized in that** each baking mould (2) is stationary in the apparatus (1) and is independent from the other(s).

2. An automatic wafer baking apparatus (1) according to claim 1, wherein the heating means comprise a low frequency induction heating system embedded into the top (3) and lower (4) plates of each baking mould (2).

3. An automatic wafer baking apparatus (1) according to claims 1 or 2, which comprises at least two baking modules (14), each baking module (14) comprising at least two baking moulds (2), and each module (14) being independent from the other(s).

4. An automatic wafer baking apparatus (1) according to any of the preceding claims, wherein each plate (3, 4) of a baking mould (2) is heat insulated at its outside surface.

5. An automatic wafer baking apparatus (1) according to any of the preceding claims, wherein the top plate (3) of each mould (2) is fixed, and wherein the moving means of the baking mould comprises:
- a closing system with a closing arm (5) moved by an actuator (6), said arm (5) being fixed at the lower surface of the lower plate (4) by a thermally insulated hinge bearing (7), and
- an adjustment system for precisely adjusting the position of the lower plate (4) parallel relative to the top plate (3) when the mould (2) is in the closed configuration, comprising a base part (8) of the lower plate (4) which is linked to the closing arm (5), with three setting screws (10) positioned in a triangle that contact a similar plate on the top plate when the mold is closed and therefore set the baking gap between the top (3) and lower (4) plates.

6. An automatic wafer baking apparatus (1) according to any of the preceding claims, wherein said plates (3, 4) are made out of cast iron or carbon steel.

7. An automatic wafer baking apparatus (1) according to any of the preceding claims, which comprises a plurality of baking modules (14) disposed in a row side by side, and further comprising a conveyor belt (13) disposed along and in front of the baking modules (14) for timing, collecting and conveying the wafers expelled from the moulds (2).

8. An automatic wafer baking apparatus (1) according to any of the preceding claims, wherein each baking plate (3, 4) comprises a temperature probe linked to a central control system.

9. An automatic wafer baking apparatus (1) according to any of the preceding claims, wherein an additional non-ferrous baking plate surface is fixed to the heating part of the baking plates (3, 4) in a removable manner.

10. An automatic wafer baking apparatus (1) according to any of the claims 2, or 6 to 9, wherein the heating means comprise a system of steam heated pipes disposed in the body of the baking plates (3, 4).

11. An automatic wafer baking apparatus (1) according to any of the claims 2, or 6 to 9, wherein the heating means comprise a system of pipes incorporated into the baking plates (3, 4), said pipes conveying a pumped hot fluid.
